# EUROPEAN PATENT SPECIFICATION

(11) **EP 0 884 229 B1**
(45) Date of publication and mention of the grant of the patent: **04.07.2001**
(21) Application number: 98303951.2
(22) Date of filing: 19.05.1998
(51) Int. Cl.: B60S 1/24, B60S 1/18

(54) **Wiper apparatus for vehicles**
Wischvorrichtung für Fahrzeuge
Dispositif d'essuyage pour des véhicules

(30) Priority: 10.06.1997 JP 16796997
(43) Date of publication of application: 16.12.1998
(73) Proprietor: Mitsuba Corporation, Kiryu-shi, Gunma-ken (JP)
(72) Inventor: Kiso, Takashi, Kiryu-shi, Gunma (JP)
(74) Representative: Smith, Norman Ian

(56) References cited:
- DE-A- 3 839 516
- DE-A- 4 337 104
- US-A- 5 119 523
- US-A- 5 287 585

## Description

### BACKGROUND OF THE INVENTION

### 1. Field of the Invention

The present invention relates to a wiper apparatus for wiping the windscreen of vehicles such as trucks, passenger cars and the like.

### 2. Description of the Related Art

In general, one known vehicle wiper apparatus is equipped with a link rod which can reciprocate in its longitudinal directions in response to a driving force from a wiper motor, a wiper shaft fixedly holding a wiper arm and supported on a body side so as to be rotatable around its axis, and a link arm whose proximal portion is fixedly secured integrally to the wiper shaft and whose end portion is pivotally supported by an end portion of the link rod so that it can swing. The wiper arm of the wiper shaft is caused to reciprocate and make a wiping action in response to reciprocatory swinging movements of the link arm around the wiper shaft causes by reciprocating movements of the link rod.

The wiper apparatus is designed so that the rotation angle of the wiper shaft, that is, the swinging angle of the link arm, directly corresponds to the wiping swinging angle of the wiper arm. There is a tendency is toward setting the swinging angle of the link arm to a large value for the purpose of securing a large window surface wiping area. On the other hand, in this case, there is a possibility that the swinging of the link arm exceeds the ordinary swinging range for some reason and it passes the limits of the reciprocating swinging range, that is, to reach a supporting point crossing position exceeding a linear positional relationship between the link arm and the link rod. For this reason, in a prior art device, a limiting means may be provided to regulate the swinging movements from exceeding the reciprocating swinging range.

Apparatus including such a limiting means is exemplified in Japanese Examined Utility Model Publication No. 55-30758 and in Japanese Unexamined Utility Model Publication No. 7-31526. In the former, a spring whose one end portion is connected to a body side is connected to a link rod at its other end portion and constructed to bias the link rod, approaching a reversal position, in a reversing direction, thereby restricting the swinging going over the reversal position. In the latter, a stopper is provided on a sleeve fixed to a body side pivotally supporting a wiper shaft to be rotatable around an axis, and when a wiper arm reaches a position exceeding the limit of the reciprocating swinging range, the wiper arm engages with the stopper to limit the swinging movement.

There is a problem which arises with the former in that, in addition to the original parts, the spring becomes necessary so that the number of parts increases and the structure becomes complicated to assemble. Moreover, since the link rod is always biased by the spring, a large-sized wiper motor for outputting a larger power is needed, thus making it difficult to achieve the need of accomplishing a compact structure which is light in weight.

In the latter, in making a limitation of the swinging of the wiper arm, a large load is placed on the sleeve having the formed stopper, and hence, the sleeve is required to have a larger strength. For this reason, in this case, the sleeve is made by aluminium die-casting. Recently, for achieving the lightness, compaction and cost reduction, the sleeve has been made of a resin. However, in the case that the aforesaid swinging limiting stopper is formed integrally with the resin-made sleeve, a sufficient strength is unobtainable and, therefore, it is not directly employable.

### SUMMARY OF THE INVENTION

Accordingly, it is an object of the present invention to alleviate or eliminate the above-mentioned problems.

For this purpose, in accordance with the present invention, a vehicle wiper apparatus is composed of a link rod reciprocating in its longitudinal directions in response to a driving force from a wiper motor, a wiper shaft fixedly holding a wiper arm and supported on a body side to be rotatable around its axis, and a link arm whose proximal portion is fixedly secured integrally to the wiper shaft and whose end portion is pivotally supported by a end portion of the link rod to be swingable, with the link arm being made to take reciprocating and wiping action about or around the wiper shaft in conjunction with reciprocative movements of the link rod, wherein swinging limiting means for limiting the swinging of the link arm exceeding a limit of a reciprocative swinging range is placed between the link arm and the link rod.

With this structure, it is possible to eliminate the need for particularly reinforcing the sleeve, and a resin-made sleeve light in weight is employable.

In this case, in this invention, the swinging limiting means can make a swinging limitation in a manner that a limiting piece placed on the link arm or the link rod is brought into contact with the link rod or the link arm, with the result that it is possible to avoid the increase in the number of parts and further to simplify the structure.

The invention will be described now by way of example only, with particular reference to the accompanying drawings in which:
Fig. 1 is a front elevational view showing an wiper apparatus according to an embodiment of the present invention;
Fig. 2 is a bottom view showing the Fig. 1 apparatus;
Fig. 3 is a plan view useful for explaining an operation of a principal section of the Fig. 1 apparatus;
Fig. 4 is a view, partially cross-sectional and front-elevational, showing the principal section of the Fig. 1 apparatus;
Fig. 5 is a bottom view showing the principal section of the Fig. 1 apparatus;
Figs. 6A and 6B are respectively a plan view and a front elevational view each showing a first link arm, and
Fig. 7 is a front elevational view of another embodiment according to the present invention.

### DETAILED DESCRIPTION OF THE INVENTION

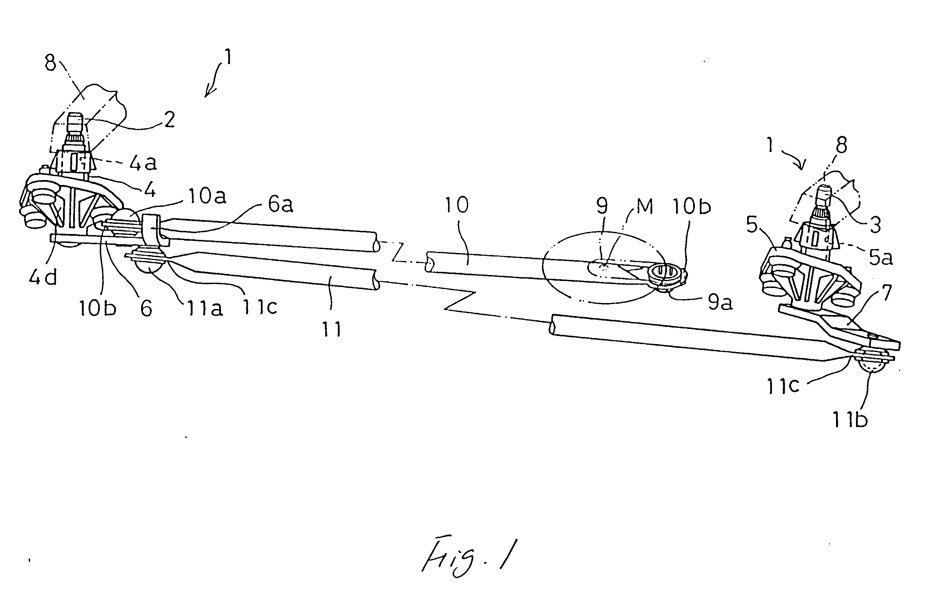

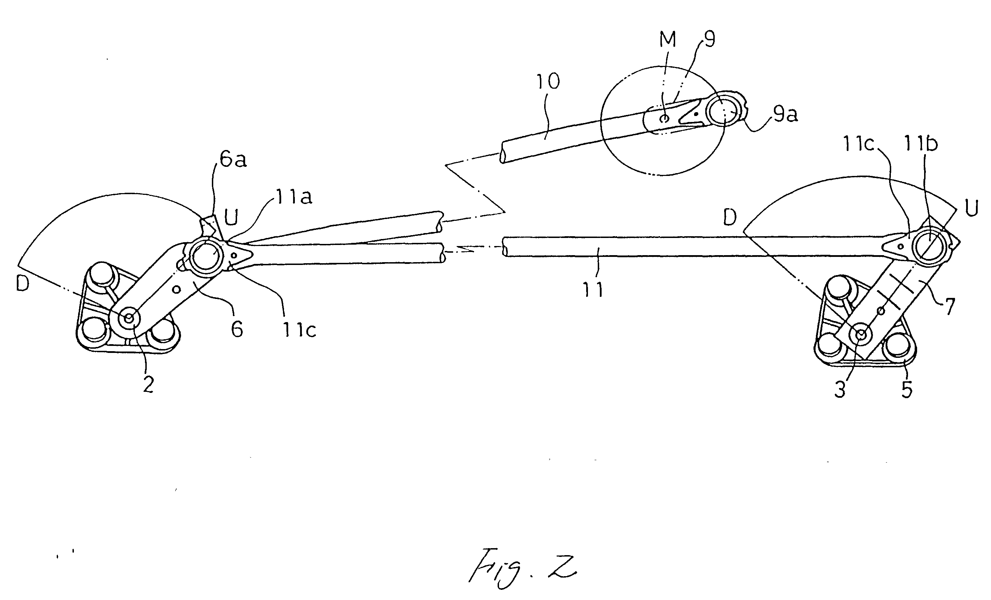

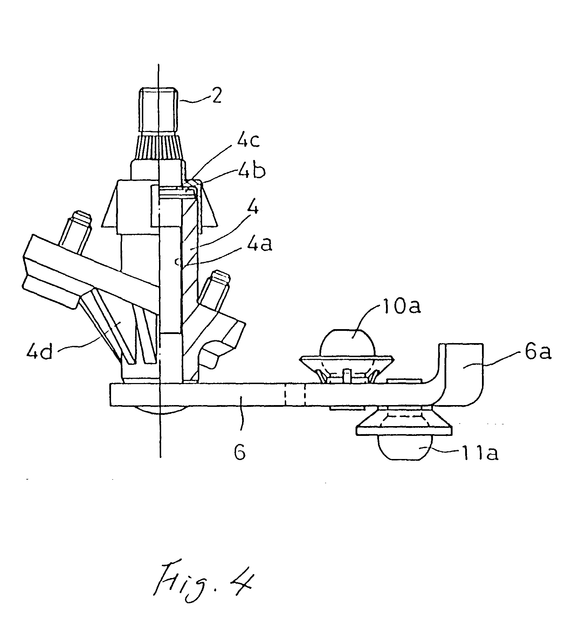

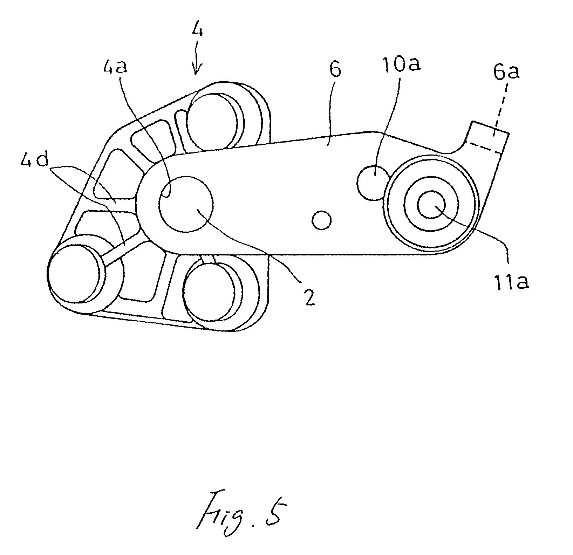

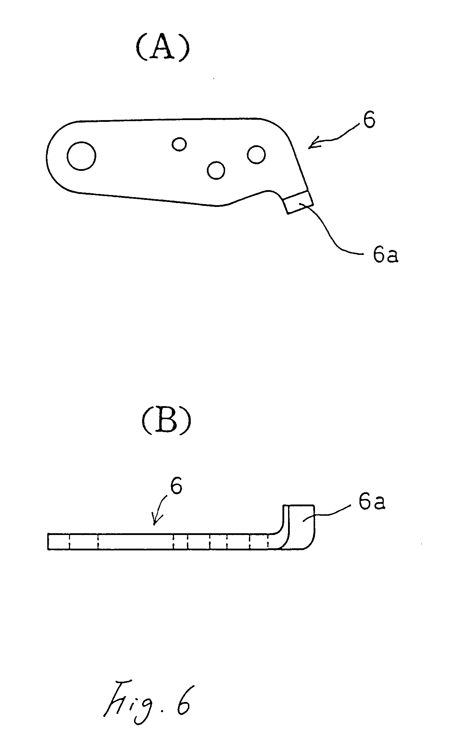

An embodiment of the present invention will be described hereinbelow with reference to Figs. 1 to 6B.

In the illustrations, designated at numeral 1 are a pair of left- and right-hand wiper apparatus to be mounted on a motor vehicle. The wiper apparatus includes a pair of first and second wiper shafts 2, 3 respectively rotatably supported in bores 4a, 5a formed in first and second sleeves 4, 5 fixed to a vehicle body side, one in opposed relation to a driver's seat section and one a passenger's seat section. Further, proximal portions of first and second link arms 6, 7, which will be described herein later, are secured integrally at proximal portions of the wiper shafts 2, 3 which protrude from the bores 4a, 5a. The wiper shafts 2, 3 have end portions respectively attached to blade-mounted wiper arms 8, and when the first and second link arms 6, 7 rock in a reciprocating way when driven by a drive mechanism which will be described herein later. The blades are made to wipe a windshield glass in a manner which will be apparent to those skilled in the art.

In this embodiment, the first and second sleeves 4, 5 are made of a resin. Further, numerals 4b, 4c denote a washer for preventing the wiper shaft 2 from falling out and a stopper ring for avoiding the falling-out, while a similar construction is made between the second wiper shaft 3 and the second sleeve 5.

A description will now be given of a drive mechanism for each of the wiper apparatus 1. Numeral 9 depicts a crank arm linked at its one end portion to a wiper motor output shaft M fixedly secured to the body side, and a first link rod 10 is supported through a ball joint 9a by the other end portion of the crank arm 9 so as to be swingable. In addition, the end portion of the first link rod 10 is supported through a ball joint 10a by an end portion of the first link arm 6 on one wiper shaft, i.e., the first wiper shaft (in this embodiment, the left-hand wiper shaft in Fig. 1) 2 side so as to be swingable.

Moreover, the proximal portion of a second link rod 11 is supported through a ball joint lla by an end portion of the first link arm 6 so as to be swingable, while the end portion of the second link rod 11 is supported through a ball joint llb by an end portion of the second link arm 7. In addition, in accordance with the rotational movement of the crank arm 9 caused by the driving of the motor, the first link rod 10 reciprocates in the longitudinal direction of the rod, whereupon the first and second link arms 6, 7 rotationally reciprocate about the axes of the first and second wiper shafts 2, 3. In this way both the wiper arms 8 swing between a lower turning position and an upper turning position to make a wiping action.

The arm members including the first and second link arms 6, 7 and the crank arm 9 are made by pattern-cutting a metallic plate material and bending it, whereas the first and second link rods 10, 11 are respectively constructed from pipe-like metallic material and both end portions thereof acting as connecting portions with the link arms 6, 7 have been flattened to form plate-like sections 10b, 11c. Further, these plate-like sections 10b, 11c are connected to the plate surfaces of the arms 6, 7 and 9 in a state of being in opposed relation to each other. A swing limiting means according to this invention is located between the first link arm 6 and the first link rod 10 of these connecting sections.

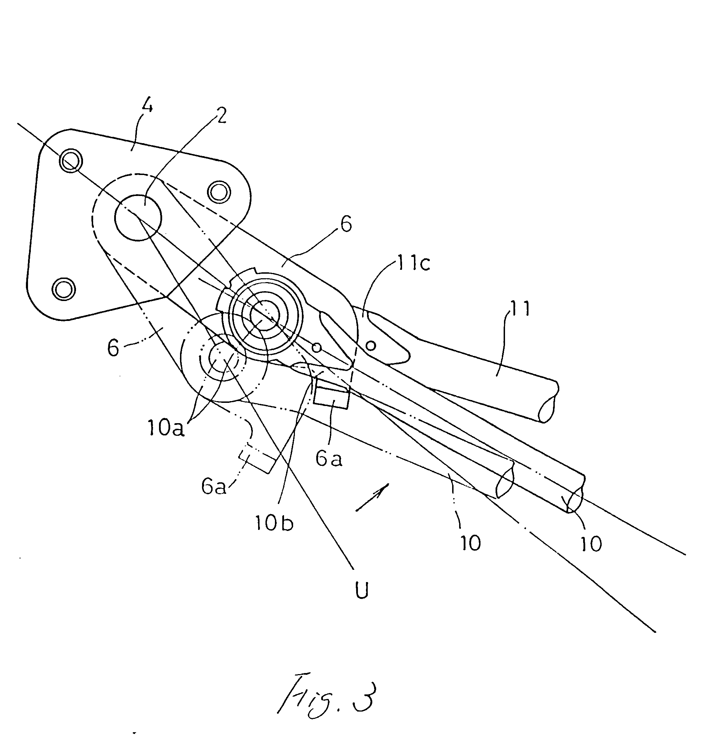

More specifically, the end portion of the first link arm 6 is connected through the ball joint 10a to the first link rod 10 on one plate surface side, and is connected through the ball joint 11a to the second link rod 11 on the other plate surface side. In addition, the first link arm 6 is designed to swing between an upper turning position U and a lower turning position D in accordance with the reciprocating movements of the first link rod 10. Integrally formed at the end portion of the first link arm 6 is a limiting piece 6a which protrudes from the plate surface and is bent in the direction of a connection side surface with the first link rod 10 to form a substantially L-like configuration. This limiting piece 6a, when the first link arm 6 swings toward the upper turning position U side, is located on the lower side in the swinging direction. Moreover, when the first link arm 6 goes over the upper turning position U and swings in the same direction to reach the limit of the swinging range set as a position somewhat before taking the supporting point crossing position where the first link arm 6 and the first link rod 10 lie on a straight line, the limiting piece 6a comes into contact with an edge portion of the first link rod plate-like section 10b as shown in Fig. 3 to limit further swinging of the first link arm 6. This limiting piece 6a is formed on the lower side in the swinging direction to the upper turning position U side, and hence, does not interfere with the members constituting the driving mechanism such as the first link rod 10 while the first link arm 6 operates in the common swinging range.

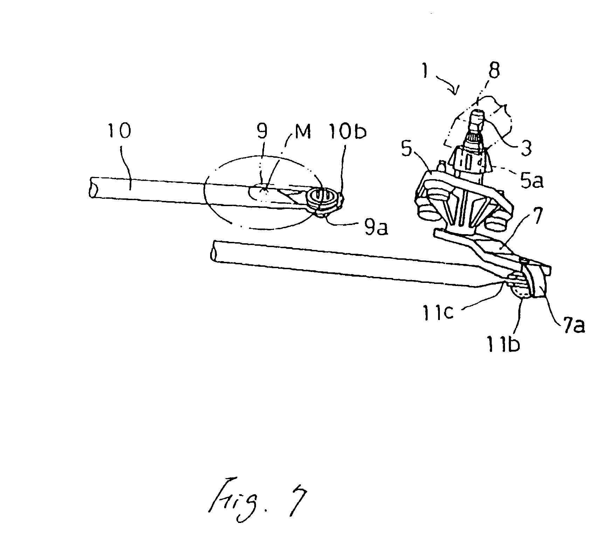

Also in this embodiment, the swinging limitation at the lower turning position D is accomplished in that the first link rod 10 comes into contact with a reinforcing rib 4d formed on the first sleeve 4. As a second embodiment shown in Fig. 7 it could also be achieved by providing a limiting means having the same structure as that of the swinging limiting means at the upper turning position U on the second link arm 7. That is, a limiting piece 7a (see Fig. 7) protruding toward the second link rod 11 connecting portion side can be formed on the second link arm 7 so as to come into contact with the second link rod 11 at a position slightly before the second link arm 7 and the second link rod 11 take a substantially linear condition when swinging toward the lower turning position D side.

In the embodiment of this invention thus constructed, the wiper arms 8 of the wiper apparatus 1 reciprocate to make wiping actions owing to the first and second link arms 6, 7 assuming the swinging actions in response to the motor driving forces, and when the wiper arm 8 moves over the ordinary upper turning position corresponding to the upper turning position U of the first link arm 6 for some reason to reach the limit of the swinging range, the limiting piece 6a which protrude from the first link arm 6 comes into contact with the first link rod 10 to limit the further swinging movement, whereupon it is possible to avoid the malfunction coming from the supporting point crossing condition of the first link arm 6 and the first link rod 10. Further, in this case, the swinging limitation of the first link arm 6 is made by the limiting piece 6a formed integrally on the first link arm 6, and therefore, unlike the prior art using a spring as a limiting member, the number of parts does not increase, and further, since the limiting piece 6a can be formed during manufacture of the first link arm 6, it is possible to contribute to the simplification of the structure and to the reduction of the manufacturing cost.

In addition, as regards the overall operation, the limiting piece 6a does not interfere with the driving mechanisms such as the first link rod 10, the second link rod 11 and the first link arm 6 at all, but interferes when reaching the limit of the swinging range, and therefore, in normal operation, no load is placed on the driving mechanisms, which avoids the need for the use of a particular large-capacity wiper motor.

Moreover, since the limiting piece 6a is formed integrally on the first link arm 6 made from a metallic plate material and the swinging limitation is achieved by the limiting piece 6a coming into contact with the first link rod 10 constructed with a metallic pipe material, unlike the prior art in which the swinging limitation is made in a manner that the arm head is brought into contact with the stopper provided on the sleeve, there is no need to reinforce the sleeve, and further a resin-made sleeve is employable.

This invention is not limited to the above-described embodiment, and naturally, the limiting piece constituting the limiting means can also be formed on the link rod side, or another member can also be attached to at least one of the link rod and the link arm, and the limiting piece is positioned between these.

It should be understood that the foregoing relates to only a preferred embodiment of the present invention, and that it is intended to cover all changes and modifications of the embodiment of the invention herein used for the purpose of the disclosure, which do not constitute departures from the scope of the invention as defined in claims 1 and 2.

## Claims

1. A vehicle wiper apparatus comprising:
a link rod (10) which can reciprocate in its longitudinal directions in response to a driving force from a wiper motor;
a wiper shaft (2,3) fixedly holding a wiper arm and supported on a body side so as to be rotatable around its axis; and
a link arm (6,7) having a proximal portion secured integrally to said wiper shaft and an end portion pivotally supported by an end portion of said link rod (10) so as to be swingable, with said link arm being arranged so that it can make reciprocating and swinging action about said wiper shaft (2,3) in conjunction with reciprocating movements of said link rod,
wherein swing limiting means (6a,7a) for limiting the extend of swing of said link arm when said link arm reaches a limit of a reciprocative swinging range is located between said link arm and said link rod.

2. A vehicle wiper apparatus as defined in claim 1, wherein said swinging limiting means comprises a limiting piece (6a) formed on one of said link arm (6) and said link rod (10) and arranged so that it comes into contact with one of said link rod and said link arm at the required limit of the swing.

## Patentansprüche

1. Wischvorrichtung für Fahrzeuge mit:
einer Hebelstange (10), die unter dem Einfluß der von einem Wischermotor gelieferten Antriebskraft Längsbewegungen in zwei einander entgegengesetzten Richtungen auszuführen vermag;
einer Wischerwelle (2,3), der ein Wischarm fest zugeordnet ist und die so auf einer Karrosserieseite gelagert ist, dass sie sich um ihre Längsachse zu drehen vermag;
einem Hebelarm (6,7) mit einem inneren, fest der Wischerwelle zugeordneten Abschnitt und einem an einem Endabschnitt der Hebelstange (10) so drehbar gelagerten Endabschnitt, dass er Schwenkbewegungen in zwei einander entgegengesetzten Richtungen gegenüber der Wischerwelle (2,3) in Verbindung mit den Bewegungen der Hebelstange auszuführen vermag,
wobei ein Schwenkwegbegrenzungsmittel (6a,7a) zur Begrenzung des Ausmaßes der Schwenkbewegungen des Hebelarms, wenn dieser einen Grenzwert des Bewegungsbereichs in zwei einander entgegengesetzten Richtungen erreicht hat, zwischen dem Hebelarm und der Hebelstange vorgesehen ist.

2. Wischeinrichtung für Fahrzeuge, wie in Anspruch 1 definiert, bei der das Schwenkwegbegrenzungsmittel ein entweder auf dem Hebelarm (6) oder der Hebelstange (10) angeordnetes Begrenzungsstück (6a) einschließt, das so angeordnet ist, dass es zum Zusammenwirken entweder mit der Hebelstange oder dem Hebelarm kommt, wenn die geforderte Begrenzung der Schwenkbewegung erreicht ist.

## Revendications

1. Un dispositif essuie-glace pour véhicules comprenant :
une tige de liaison (10) qui peut se déplacer en va-et-vient dans sa direction longitudinale en réponse à une force d'entraînement en provenance d'un moteur d'essuie-glace ;
un arbre d'essuie-glace (2, 3) maintenant de manière fixe un bras d'essuie-glace et porté sur un côté de carrosserie de manière à pouvoir tourner autour de son axe ; et
un bras de liaison (6, 7) présentant une partie proximale fixée solidairement audit bras d'essuie-glace et une partie d'extrémité portée de manière pivotante par une partie d'extrémité de ladite tige de liaison (10) de manière à pouvoir osciller, ledit bras de liaison étant disposé pour qu'il puisse effectuer une action en va-et-vient et en oscillation autour dudit arbre d'essuie-glace (2, 3) en liaison avec des mouvements de va-et-vient de ladite tige de liaison,
dans lequel des moyens de limitation d'oscillation (6a, 7a), permettant de limiter l'étendue d'oscillation dudit bras de liaison lorsque ce bras de liaison atteint une limite d'une gamme d'oscillation en va-et-vient, sont placés entre ledit bras de liaison et ladite tige de liaison.

2. Un dispositif d'essuie-glace pour véhicules tel que revendiqué à la revendication 1, dans lequel lesdits moyens de limitation d'oscillation comprennent une pièce limiteuse (6a) formée soit sur ledit bras de liaison (6) soit sur ladite tige de liaison (10) et disposée de manière à ce qu'elle vienne en contact soit avec ladite tige de liaison soit avec ledit bras de liaison au niveau de la limite requise d'oscillation..
